# EUROPEAN PATENT SPECIFICATION

(11) **EP 2 477 201 B1**
(45) Date of publication and mention of the grant of the patent: **07.01.2015**
(21) Application number: 11151053.3
(22) Date of filing: 14.01.2011
(51) Int. Cl.: H01H 9/50, H01H 33/26, H02B 13/025

(54) **Improvement in or relating to arc suppression systems**
Verbesserung an oder im Zusammenhang mit Lichtbogenunterdrückungssystemen
Améliorations des ou en relation avec les systèmes de suppression d'arc

(43) Date of publication of application: 18.07.2012
(73) Proprietor: Het Veer NV, 9000 Gent (BE)
(72) Inventor: Vandoorne, Rik, 9850 NEVELE (BE)
(74) Representative: Mackett, Margaret Dawn

(56) References cited:
- EP-A1- 1 463 172
- DE-A1- 4 111 586
- DE-U- 7 505 183

## Description

The present invention relates to improvements in or relating arc suppression systems and is more particularly concerned such systems that operate quickly to minimise the effects that are associated when an electric arc is detected.

Arcing in electrical systems is created by a fault in the electrical system. Such arcing can cause the generation of hazardous gases, the generation of which needs to be terminated as soon as possible. Moreover, a build up of pressure within the electrical system may be created due to the presence of electrical arcing. The document "EP 1 463 172 A1" discloses an arc suppression apparatus according to the preamble of claim 1.

It is therefore an object of the present invention to provide an arc suppression system that includes an arc detection system that rapidly creates a metal short circuit in electrical apparatus to which it is connected thereby terminating the generation of hazardous gases and reducing the build up of pressure.

In accordance with a first aspect of the present invention, there is provided arc suppression apparatus for creating a metal short circuit when an electric arc is detected, the apparatus comprising:-
at least one electrical connector to which a supply of electricity can be connected;
a moveable contact member that can move from a first position to a second position to contact each electrical connector;
a locking mechanism for locking the moveable contact member in the first position that is spaced from each electrical connector; and
an arc detection system for providing a release signal for the locking mechanism when an arc is detected, the locking mechanism releasing the moveable contact member in response to the release signal so that it can move into contact with each electrical connector to create the short circuit;
characterised in that the moveable contact member has contacts mounted thereon which engage respective ones of said at least one electrical connector when the moveable contact member moves into contact with each electrical connector;
and in that the moveable contact member is supported on a central guide element extending to a base of the locking mechanism with guide members being provided above the moveable contact member for providing alignment of pairs of contacts with respective ones of said at least one electrical connector during deployment of the moveable contact member.

Advantageously, each electrical conductor and the moveable contact member is correctly aligned through the entire lifespan of the arc suppression apparatus, that is, both during normal operation (no internal arcing) and in the presence of an internal arc.

This is due to the presence of the guide members which support the moveable contact member and along which the moveable contact member moves when moving from the first position, spaced away from each electrical conductor, to the second position, in contact with each electrical connector. Each guide element could be connected or spaced away from the fixed contact.

The locking mechanism retains the moveable contact member in the first position, and at least one drive element moves the moveable contact member to the second position when the locking mechanism is released. Each drive element preferably comprises an energy storage device that releases stored energy to move the moveable contact member into the second position.

In a preferred embodiment of the present invention, each drive element comprises a spring element that is compressed when the moveable contact member is in the first position. Alternatively, each drive element may comprise a piston arrangement or an electromagnetic actuator arrangement.

The locking mechanism may further comprise a first shaft member that engages a central guide element, the first shaft member including a slot portion that engages with a portion of the central guide element in a locked position.

Additionally, the locking mechanism may further comprise a first cam element mounted on a second shaft member and connected to the first shaft member, the first cam element having at least one locking location, and an actuating arm that engages a locking location on the first cam element.

A second cam member is mounted on the first shaft member and is biased in the locked position by the engagement of the first cam member with the first shaft member. When the release signal is applied to the first cam member, the second shaft member moves the second cam member to an unlocked position, rotating the first shaft member out of engagement with the central guide member to release the moveable contact member.

In one embodiment of the present invention, the release signal comprises rotation of the actuating arm about a pivot to rotate the first cam member thereby releasing the second cam member.

Rotation of the actuating arm may be caused by deformation of a deformable membrane of the arc detection system, an end of the actuating arm remote from the locking portion and located on the other side of the pivot being connected to the deformable membrane, the deformation of which rotates the actuating arm about the pivot to generate the release signal.

The arc detection system may comprise a pressure detection device of which the deformable membrane forms a part, the deformable membrane providing the release signal for the locking mechanism in accordance with a pressure wave generated by an arc.

However, other methods of detecting an arc may be employed, for example, plasma detection and/or current detection.

The arc suppression system in accordance with the present invention reduces the effect that occurs when a fault develops in an electrical system. This has result that the risks of internal arcing within an electrical system to which the arc suppression system is connected can be considered as being negligible.

Moreover, such an arc suppression system, due to its rapid deployment, effectively prevents the build up of pressure created by gases generated by internal arcing so that less demands are required for buildings in which the electrical system is located.

For a better understanding of the present invention, reference will now be made, by way of example only, to the accompanying drawings in which:-
Figure 1 illustrates a perspective view of an arc detection system in accordance with the present invention in a normal operating position;
Figure 2 illustrates a perspective view of an arc detection unit in accordance with the present invention;
Figure 3 illustrates a side view of the arc detection system of Figure 1;
Figure 4 is similar to Figure 1 but with mobile contact system removed;
Figure 5 is similar to Figure 1 but with the carrier arm removed; and
Figure 6 is similar to Figure 1 but with the arc detection system in the short-circuit position.

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

The present invention relates to arc detection apparatus in which the effects that could occur when a fault in an electrical unit develops, in particular, the reduction of the effects of internal electric arcing. The arc detection system can be used in low, medium and high voltage circuits. In addition, the present invention is able to fulfil its function independently of its mounting position, the location in which it is mounted and the environment into which it is integrated.

In relation to its mounting position, the present invention can be mounted horizontally or vertically or even at an angle to the horizontal and/or vertical. It can be mounted in a closed unit or can be open to the air. The environment into which the invention is integrated may be air or an insulating gas such as sulphur hexafluoride (SF₆) gas or nitrogen (N₂) gas. Naturally, other environments are also possible.

The operation of the arc detection system in accordance with the present invention relies on the rate at which an arc detection system determines the presence of a flaw in the electrical system or switchgear to which it is connected. As a result, arc detection should occur as quickly as possible to reduce any damage to the electrical system.

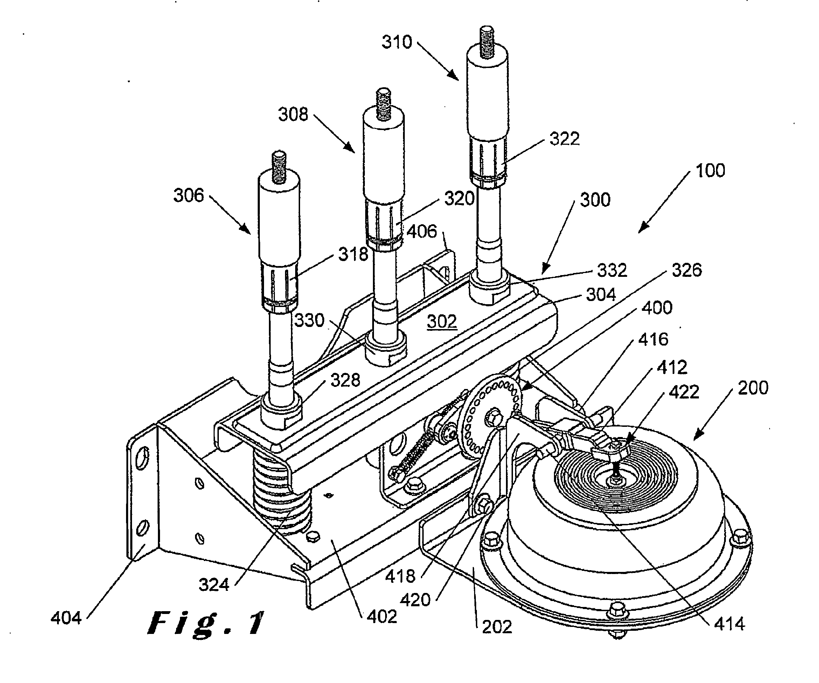

Referring initially to Figure 1, an arc detection system 100 in accordance with the present invention is shown. The arc detection system 100 comprises three fundamental parts, namely, an arc detection system 200, a mobile contact system 300 and a lock-secure system 400.

As shown, a base 202 of the arc detection system 200 is connected to a base 402 of the lock-secure system 400. The base 402 of the lock-secure system 400 also forms a base on which the mobile contact system 300 is mounted.

The arc detection system 100 as shown can be mounted to any suitable surface in the vicinity of the switchgear to be protected by means of brackets 404, 406 attached to the base 402 of the lock-secure system 400.

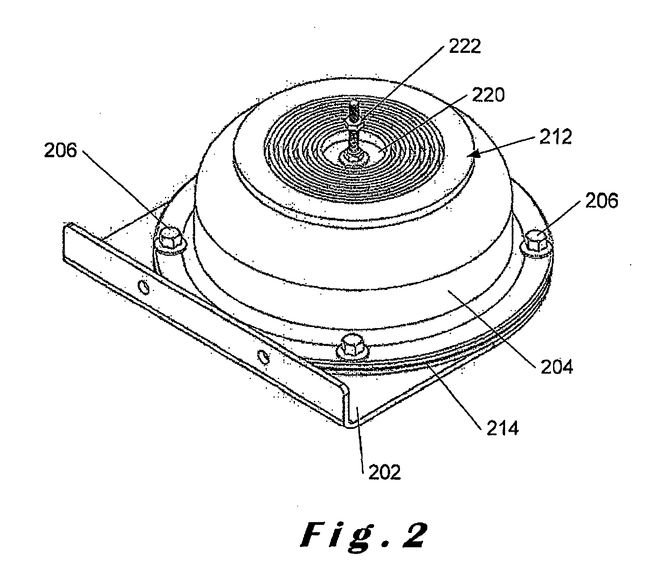

The arc detection system 200 will now be described with reference to Figure 2. This arc detection system 200 is based on pressure detection. When an arc detection system is used which is based on pressure detection, it is ideally located with the electrical switchgear that is to be protected. If it is not located in the vicinity of the electrical switchgear that is to be protected, it will not be in the correct position to detect a pressure wave caused by arcing within the switchgear.

The arc detection system 200 comprises the base 202 on which is mounted a housing 204, the housing 204 being fixed to the base 202 by bolts 206. A membrane 212 is mounted in the housing 204. The base 202, the housing 204 and the membrane 212 together define a reference chamber. In order to seal the reference chamber, a gasket or seal 214 is provided between the housing 204 and the base 202, the gasket or seal 214 being retained in place by the bolts 206. The gasket or seal 214 ensures that the reference chamber is sealed which is essential for the operation arc detection system 200. Nevertheless, care is taken to cancel out fluctuations due to normal operation of the switchgear or environmental changes.

The membrane 212 can be deflected from a first position (shown) to a second position (not shown) when a pressure wave caused by a fault or arc in the switchgear to which it is associated is detected. A connecting bolt 222 is provided on a central portion 220 of the membrane 212 to which an actuating arm (shown as 412 in Figures 1 and 2) of the lock-secure system 400 (Figure 1) is connected.

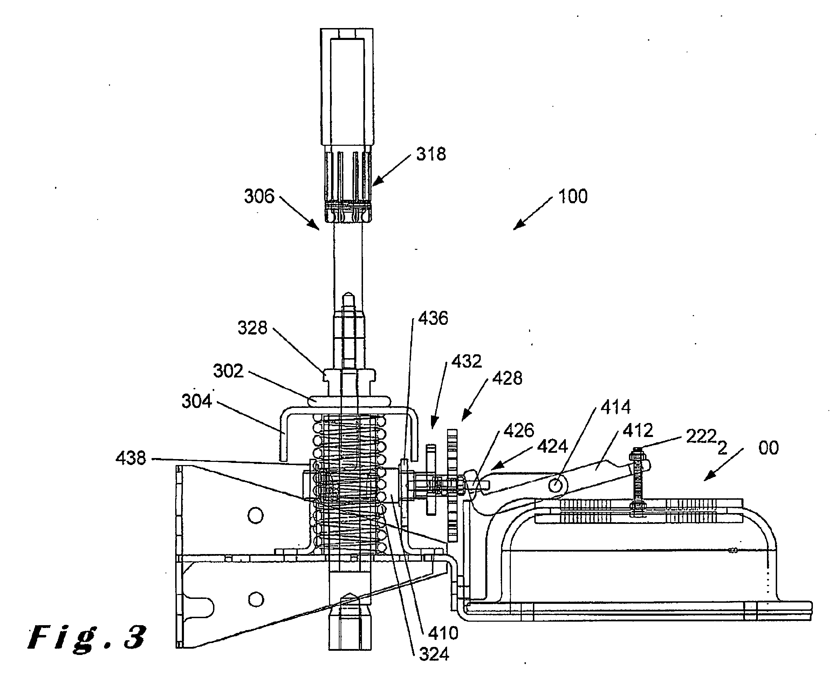

When an internal arc occurs in the switchgear with which the arc detection system 200 is associated, the central portion 220 of the membrane 212 deflects in a direction towards the housing 204 due to a rise in pressure. When the pressure inside the switchgear reaches a predetermined threshold value, the membrane 212 provides a corresponding deflection. This moves the actuating arm (shown in Figures 1 and 3) of the lock-secure system 400 due to its connection to the connecting bolt 222. The actuating arm provides a release signal for the lock-secure system 400 to release it and to allow movement of the mobile contact system 300 as is described in more detail below.

The presence of a fault in the switchgear can be detected either directly or indirectly. The arc detection system 200 as described above provides indirect detection of the presence of an arc in the switchgear. It will be appreciated that a direct detection system can also be used.

Returning now to Figure 1, an actuating arm 412 is shown connected to the connecting bolt 222 of the arc detection system 200. The operation of the actuating arm 412 and the rest of the lock-secure system 400 will be described in more detail below.

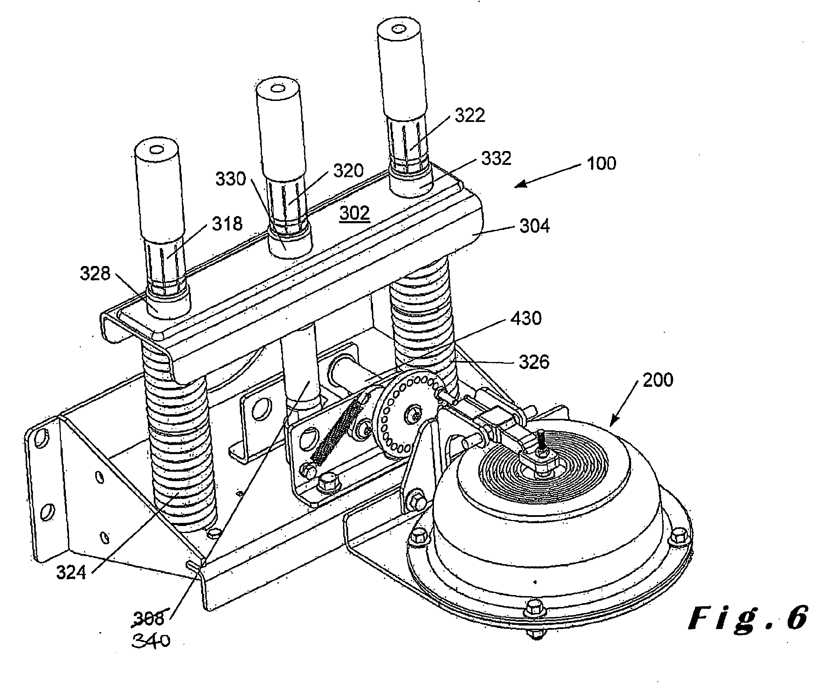

Also shown in Figure 1, the mobile contact system 300 comprises a contact plate 302 which is mounted on a carrier arm 304. The contact plate 302 and the carrier arm 304 can be considered to be a single moveable contact member 302. The contact plate 302 and carrier arm 304 are supported on a cylindrical central guide member 340 that extends through to the base 402 as is shown more clearly in Figure 6. Guide members in the form of further support members 306, 308, 310 are provided above the moveable contact member 302.

Fixed contacts 318, 320, 322 may be connected to respective lines of a three-phase AC supply (not shown). The lines may be connected to the contacts 318, 320, 322 by any suitable arrangement, for example, the lines may be connected by screws, collars or any other ways of connecting electricity supply lines to a conductive terminal.

Three moveable contacts 328, 330, 332 are mounted on the contact plate 302 which engage with respective ones of the fixed contacts 318, 320, 322 when the arc detection system has been activated. During activation of the arc suppression system 100, the contact plate 302 and carrier arm 304 moves with the moveable contacts 328, 330, 332 when moving from a first position where there is no contact with the fixed contacts 318, 320, 322 as shown in Figure 1 to a second position where the moveable contacts 328, 330, 332 engage with the fixed contacts 318, 320, 322 as shown in Figure 6. The guide members 306, 308, 310 provide the desired alignment of respective pairs of fixed and moveable contacts during the deployment of the moveable contact member 302. The guide members provide the desired alignment eve3n when the side effects of an internal arc reaches its maximum, that is, when the enclosure in which the arc suppression system is mounted is exposed to a pressure build-up.

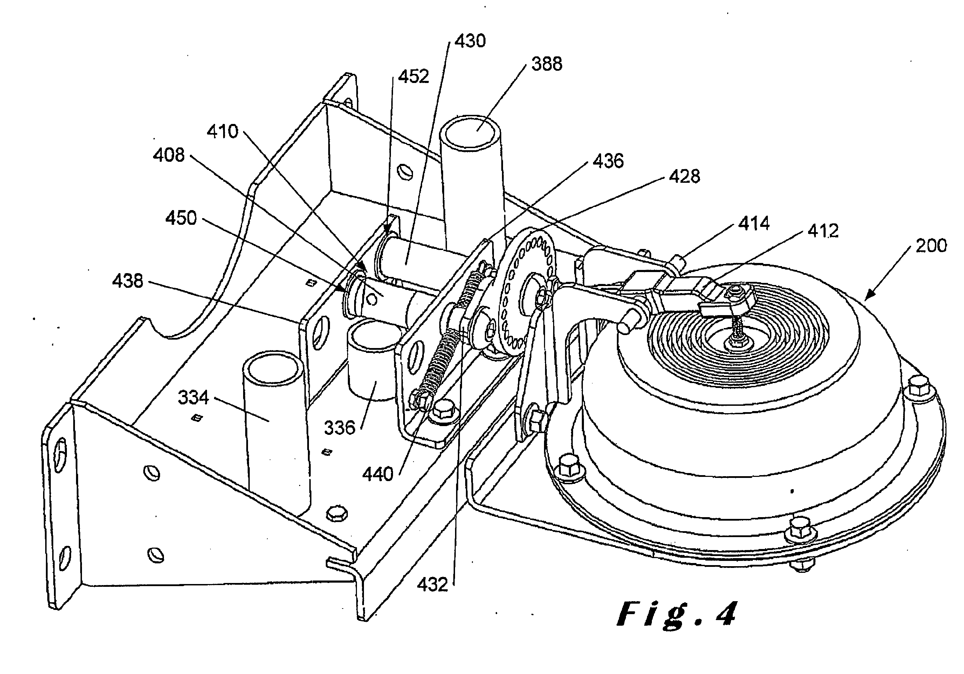

In this particular embodiment, a pair of compression springs 324, 326 are provided between the moveable contact member 302 and the base 402 as is shown more clearly in Figure 3, each spring 324, 326 is compressed until activated by the release of the lock-secure system 400. These compression springs 324, 326 can be considered to be drive elements for driving the moveable contacts 328, 330, 332 carried by the contact plate 302 into contact with the fixed contacts 318, 320, 322 as rapidly as possible once the lock-secure system 400 has been released. The compression springs 324, 326 are located in position over tubular locators 334, 338 as shown more clearly in Figure 4.

The base 402 provides a fixed portion of the arc suppression system 100 as it is mounted by means of brackets 404, 406 to any suitable surface and in any suitable orientation as described above.

Central guide member 308 does not have a compression spring associated with it but is retained in a locked position by means of a flat 408 formed in a locking shaft 410 of the lock-secure system 400 as is shown in Figure 4. The engagement of the flat 408 formed in the locking shaft 410 and the central guide member 308 fixes the mobile contact system 300 with respect to the base 402. In this position, there is no contact between the contact plate 302 carrying the moveable contacts 328, 330, 332 and the fixed contacts 306, 308, 310. This is shown more clearly in Figure 4.

Figure 3 shows a side view of the arc suppression system 100 in accordance with the present invention. Here, it can more clearly be seen that the actuating arm 412 of the lock-secure system 400 is pivotably mounted on a pivot 414 that extends between two brackets 416, 418. The brackets 416, 418 are mounted to the base 202 of the arc detection system 200 and to the base portion 402 of the lock-secure system 400. Bolts 420 effectively bolt the base portions 202, 402 and the brackets 416, 418 together as shown. One end 422 of the actuating arm 412 is connected to the bolt 222 and the other end 424 thereof holds a pin member 426 that engages a hole (not shown) provided in a circular pin wheel 428. End 424 may comprise the pin member itself or, as shown, it comprises a fork portion that retains the pin member 426 between two members.

Pin wheel 428 is mounted on a shaft 430 which engages with a cam member 432. The cam member 432 is mounted on one end 434 of locking shaft 410 for rotation about an axis passing through the shaft 410. End 434 of locking shaft 410 is mounted on a mounting plate 436 attached to the base 402. The mounting plate 436 is in the form of a right-angled bracket where one portion is bolted to the base 402 and the other portion forms a mounting portion for components of the lock-secure system 400. Shaft 430 is also mounted on mounting plate 436 as shown.

Figure 4 is similar to Figure 1 but with the mobile contact system 300 removed. As shown, and also in Figure 3, the shaft 430 extends through the mounting plate 436 and is retained in a bearing 450 mounted in another mounting plate 438. Locking shaft 410 also extends through the mounting plate 436 and is retained in a bearing 452 in mounting plate 438.

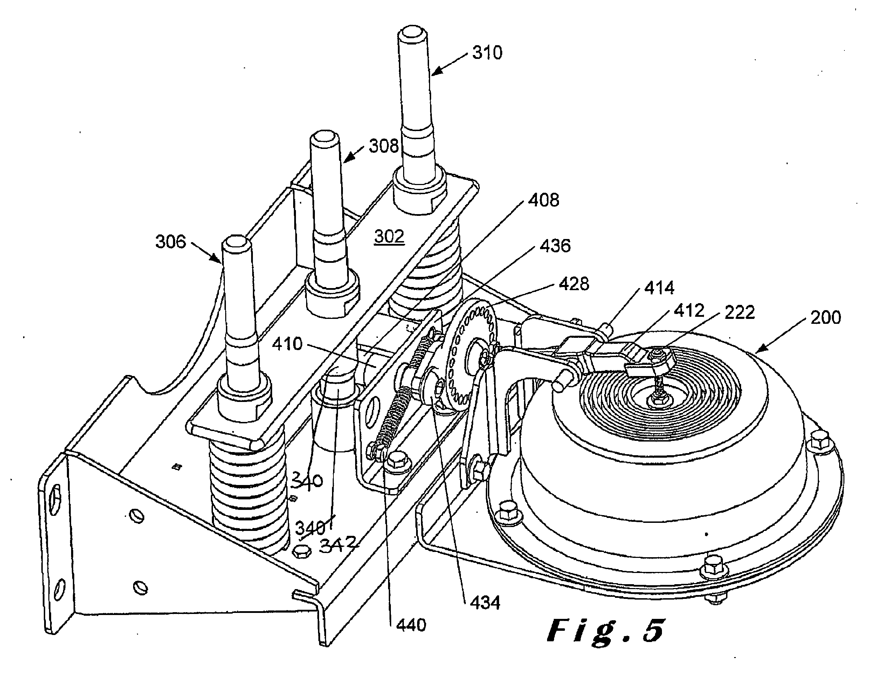

As described above, base 402 includes three tubular locators 334, 336, 338 for locating the cylindrical central guide member 308 and the two compression springs 324, 320. Cylindrical locator 336 is shorter than the other two because space needs to be left for the locking shaft 410 as shown in Figure 5.

Figure 5 is similar to Figure 1 but with the carrier arm 304 and fixed contacts 318, 320, 322 removed. Here, it is possible to see that the locking shaft 410 includes a flat 408 for retaining central guide member 308 in position. Central guide member 340 has a cylindrical groove 342 formed in it which engages the flat 408 of the locking shaft 410. This engagement effectively locks the mobile contact system 300 in position so that the moveable contacts 328, 330, 332 carried by contact plate 302 does not make contact with fixed contacts 318, 320, 322 to cause a short circuit.

A spring element 440 is mounted on the mounting plate 436 and fits into a hole formed in the cam member 432 as shown to bias the position of the locking shaft 410 in a position where it no longer engages the central support member 308 and the mobile contact system 300 is free to move in a direction away from the base 402 under a driving force provided by the action of the compression springs 324, 326 once they are able to convert the stored energy to move the contact plate 302 away from the base 402. The compression springs 324, 326 also prevent the mobile contact system 300 being repelled due to the repulsion between the fixed and mobile contacts 318, 320, 322, 328, 330, 332 as they are forced together to create the short circuit. However, the mobile contact system 300 is retained in place by means of the engagement of the flat 408 in the shaft 410 and the cam member 432. The pin member 426 is connected in one of the holes provided in the pin wheel 428. In this position, the arc suppression system 100 is primed for activation when an arc is detected by the arc detection system 200.

When an arc is detected by the arc detection system 200, the membrane 212 deflect in a direction towards the base 202 of the housing 204 due to a rise in pressure caused by an arc within the switchgear. Connection bolt 222 moves with the membrane 212 rotating the actuating arm 412 about pivot 414. This rotation causes a rotation of the pin member 426 and the pin wheel 428. This rotation causes the cam member 432 to rotate about the axis passing through end 434 of locking shaft 410 together with the locking shaft 410. Rotation of the locking shaft 410 causes the flat 408 to become disengaged from the cylindrical groove 340 of the central support member 308 and the mobile contact system 200 is free to move under the action of the springs 324, 326 away from the base 402 until the moveable contacts 328, 330, 332 make contact with respective ones of the fixed contacts 318, 320, 322 to cause a short circuit.

The energy required of the operation of the arc suppression system in accordance with the present invention is stored in the compression springs 324, 326 located between the base 402 and carrier arm 304 and contact plate 302 of the mobile contact system 300. The lock-secure system 400 guarantees to block the release of this stored energy until the system receives a release signal in the form of actuation of actuating arm 412.

Figure 6 illustrates the arc suppression system 100 of the present invention in a deployed or short-circuited position. Here, it can clearly be seen that rotation of the pin wheel 426 has caused cam member 432 to rotate. As a result of the rotation of the cam member 432, shaft 410 to which it is fixed is also rotated to release the flat 408 from engagement with the shaft 410. The compression springs 324, 326 have driven that contact plate 302 towards the fixed contacts 318, 320, 322 so that the moveable contacts 328, 330, 332 engage respective ones of the fixed contacts 318, 320, 322 as shown.

The lock-secure system 400 does not function until arcing occurs in an electrical unit to which the arc suppression system is connected. Moreover, the lock-secure system 400 does not function as a result of vibrations originating in the environment.

When the presence of an electrical fault is observed, the arc detection system 200 forwards the release signal to the lock-secure system 400. On receipt of this signal, the previously stored energy in the springs is released so that the mobile contact system 300 creates a metal short circuit. The short circuit removes the electrical feed to the fault inside the electrical unit or switchgear that is being protected.

Although the activation of the mobile contact system 300 is described with reference to energy stored in compression springs, it will be appreciated that other activation devices may be used that allow rapid deployment of the moveable contacts 328, 330, 332. Examples of other suitable activation devices include piston arrangements and electromagnetic actuators.

In addition, the pin wheel 428 may be replaced with a cam member which can be rotated by the action of the actuating arm 412 in response to the detection of an arc by the arc detection system 200.

Although the present invention has been described for use with a three-phase electrical system, it will be readily appreciated that the invention may also be utilised in single-phase systems or low voltage three-phase systems where a fourth contact is provided.

Tests were carried out to evaluate the arc suppression system in accordance with the present invention. It was shown that the arc suppression system met the requirements of tests carried out in accordance with the IEC 62271-200 standard (RP2514-10/K, TR2997.2090067.0030/1 and RP276-09/K) due to the rapid operation of the arc suppression system in accordance with the present invention.

The arc detection system 100 in accordance with the present invention addresses the lock-secure system in and extremely fast and adequate manner when internal arcing occurs. Because the lock-secure system is addressed sufficiently fast, the metal short circuit is applied in time to reduce all the harmful consequences of an internal arc in such a way that the consequences can be considered to be negligible, for example, a substantial rise in pressure and the emission of hot gases are avoided.

## Claims

1. Arc suppression apparatus (100) for creating a metal short circuit when an electric arc is detected, the apparatus comprising:-
at least one electrical connector (318, 320, 322) to which a supply of electricity can be connected;
a moveable contact member (302) that can move from a first position to a second position to contact each electrical connector (318, 320, 322);
a locking mechanism (400) for locking the moveable contact member (302) in the first position that is spaced from each electrical connector (318, 320, 322); and
an arc detection system (200) for providing a release signal for the locking mechanism (400) when an arc is detected, the locking mechanism (400) releasing the moveable contact member (302) in response to the release signal so that it can move into contact with each electrical connector (318, 320, 322) to create the metal short circuit;
**characterised in that** the moveable contact member (302) has contacts (328, 330, 332) mounted thereon which engage respective ones of said at least one electrical connector (318, 320, 322) when the moveable contact member (302) moves into contact with each electrical connector (310, 320, 322);
and **in that** the moveable contact member (302) is supported on a central guide element (340, 342) extending to a base (402) of the locking mechanism (400) with guide members (306, 308, 310) being provided above the moveable contact member (302); for providing alignment of pairs of contacts (328, 330, 332) with respective ones of said at least one electrical connector (318, 320, 322) during deployment of the moveable contact member (302).

2. Apparatus according to claim 1, wherein the moveable contact member (302) comprises at least one drive element (324, 326) which moves the moveable contact member (302) from the first position to the second position when the locking mechanism (400) is released.

3. Apparatus according to claim 2, wherein each drive element (324, 326) comprises an energy storage device that releases that stored energy to move the moveable contact member (302) into the second position.

4. Apparatus according to claim 3, wherein each drive element comprises a spring element (324, 326) that is compressed when the moveable contact member (302) is in the first position.

5. Apparatus according to claim 3, wherein each drive element comprises a piston arrangement.

6. Apparatus according to claim 3, wherein each drive element comprises an electromagnetic actuator.

7. Apparatus according to any one of the preceding claims, wherein the locking mechanism (400) further comprises a first shaft member (410) that engages the central guide element (340), the first shaft member (410) including a slot portion (408) that engages with a portion (342) of the central guide element (340) in a locked position.

8. Apparatus according to claim 7, wherein the locking mechanism (400) further comprises a first cam element (428) mounted on a second shaft member (430) and connected to the first shaft member (410), the first cam element (428) having at least one locking location; and an actuating arm (412) that engages a locking location on the first cam element (428).

9. Apparatus according to claim 8, wherein the locking mechanism (400) further comprises a second cam member (432) mounted on the first shaft member (410) and being biased in the locked position by the engagement of the second cam member (432) with the second shaft (430).

10. Apparatus according to claim 9, wherein the second cam member (432) moves to an unlocked position when the release signal is applied to the first cam member (426), the second cam member (432) rotating the first shaft member (410) out of engagement with the central guide member (340) to release the moveable contact member (302).

11. Apparatus according to claim 10, wherein the release signal comprises rotation of the actuating arm (412) about a pivot (414) to rotate the first cam member (426) thereby releasing the second cam member (432).

12. Apparatus according to claim 11, wherein rotation of the actuating arm (412) is caused by deformation of a deformable membrane (212) of the arc detection system (200), an end (422) of the actuating arm (412) remote from the locking portion and located on the other side of the pivot (414) being connected to the deformable membrane (212), the deformation of which rotates the actuating arm (412) about the pivot (414) to generate the release signal.

13. Apparatus according to claim 12, wherein the arc detection system (200) comprises a pressure detection device of which the deformable membrane (212) forms a part, the deformable membrane (212) providing the release signal for the locking mechanism (400) in accordance with a pressure wave generated by an arc.

14. Apparatus according to any one of the preceding claims, further comprising a housing in which the apparatus is mounted.

15. Apparatus according to claim 14, wherein the housing contains air or a gas.

## Patentansprüche

1. Funkenlöschvorrichtung (100) zum Erzeugen eines Metallkurzschlusses, wenn ein Lichtbogen festgestellt wird, wobei die Vorrichtung Folgendes umfasst:
mindestens einen elektrischen Verbinder (318, 320, 322), mit dem eine Stromversorgung verbunden werden kann;
ein bewegliches Kontaktelement (302), das sich von einer ersten Position in eine zweite Position in Kontakt mit jedem elektrischen Verbinder (318, 320, 322) bewegen kann;
einen Verriegelungsmechanismus (400) zum Verriegeln des beweglichen Kontaktelementes (302) in der ersten Position, der einen Abstand von jedem elektrischen Verbinder (318, 320, 322) hat; und
ein Lichtbogenfeststellungssystem (200) zum Bereitstellen eines Auslösesignals für den Verriegelungsmechanismus (400), wenn ein Lichtbogen festgestellt wird, wobei der Verriegelungsmechanismus (400) das bewegliche Kontaktelement (302) als Reaktion auf das Auslösesignal freigibt, so dass es sich in Kontakt mit jedem elektrischen Verbinder (318, 320, 322) bewegen kann, um den Metallkurzschluss zu erzeugen;
**dadurch gekennzeichnet, dass** das bewegliche Kontaktelement (302) darauf befestigte Kontakte (328, 330, 332) hat, die Kontakt mit den jeweiligen elektrischen Verbindern (318, 320, 322) herstellen, wenn das bewegliche Kontaktelement (302) sich bewegt und Kontakt mit jedem elektrischen Verbinder (310, 320, 322) herstellt;
und darin, dass das bewegliche Kontaktelement (302) auf einem zentralen Führungselement (340, 342) abgestützt wird, das sich bis zu einer Basis (402) des Verriegelungsmechanismus (400) mit Führungselementen (306, 308, 310) erstreckt, welches oberhalb des beweglichen Kontaktelementes (302) vorgesehen ist, um für die Ausrichtung von Paaren von Kontakten (328, 330, 332) mit dem jeweiligen elektrischen Verbinder (318, 320, 322) während des Einsatzes des beweglichen Kontaktelementes (302) zu sorgen.

2. Vorrichtung nach Anspruch 1, wobei das bewegliche Kontaktelement (302) mindestens ein Antriebselement (324, 326) umfasst, welches das Kontaktelement (302) aus der ersten Position in die zweite Position bewegt, wenn der Verriegelungsmechanismus (400) ausgelöst wird.

3. Vorrichtung nach Anspruch 2, wobei jedes Antriebselement (324, 326) eine Energiespeichervorrichtung umfasst, die diese gespeicherte Energie zum Bewegen des beweglichen Kontaktelementes (302) in die zweite Position freigibt.

4. Vorrichtung nach Anspruch 3, wobei jedes Antriebselement ein Federelement (324, 326) umfasst, das komprimiert wird, wenn das bewegliche Kontaktelement (302) sich in der ersten Position befindet.

5. Vorrichtung nach Anspruch 3, wobei jedes Antriebselement eine Kolbenanordnung umfasst.

6. Vorrichtung nach Anspruch 3, wobei jedes Antriebselement einen elektromagnetischen Aktor umfasst.

7. Vorrichtung nach einem der vorherigen Ansprüche, wobei der Verriegelungsmechanismus (400) ferner ein erstes Wellenelement (410) umfasst, das in das zentrale Führungselement (340) eingreift, wobei das erste Wellenelement (410) einen Schlitzteil (408) umfasst, der in einen Teil (342) des zentralen Führungselementes (340) in einer verriegelten Position eingreift.

8. Vorrichtung nach Anspruch 7, wobei der Verriegelungsmechanismus (400) ferner ein erstes Nockenelement (428) umfasst, das auf einem zweiten Wellenelement (430) befestigt ist und mit dem ersten Wellenelement (410) verbunden ist, wobei das erste Nockenelement (428) mindestens eine Verriegelungsstellung hat;
und einen Betätigungsarm (412), der in eine Verriegelungsstellung auf dem ersten Nockenelement (428) eingreift.

9. Vorrichtung nach Anspruch 8, wobei der Verriegelungsmechanismus (400) ferner ein zweites Nockenelement (432) umfasst, welches auf dem ersten Wellenelement (410) befestigt ist und in der verriegelten Position durch das Eingreifen des zweiten Nockenelementes (432) in die zweite Welle (430) vorgespannt ist.

10. Vorrichtung nach Anspruch 9, wobei das zweite Nockenelement (432) sich in eine unverriegelte Position bewegt, wenn das Auslösesignal an das erste Nockenelement (426) angelegt wird, wobei das zweite Nockenelement (432) das erste Wellenelement (410) aus dem Eingriff in das zentrale Führungselement (340) heraus bewegt, um das bewegliche Kontaktelement (302) freizugeben.

11. Vorrichtung nach Anspruch 10, wobei das Auslösesignal die Drehung des Betätigungsarms (412) um einen Drehpunkt (414) umfasst, um das erste Nockenelement (426) zu drehen, um damit das zweite Nockenelement (432) freizugeben.

12. Vorrichtung nach Anspruch 11, wobei die Drehung des Betätigungsarms (412) durch die Verformung einer verformbaren Membran (212) des Lichtbogenfeststellungssystems (200) verursacht wird, wobei ein Ende (422) des Betätigungsarms (412), das entfernt vom Verriegelungsabschnitt ist und sich auf der anderen Seite des Drehpunktes (414) befindet, mit der verformbaren Membran (212) verbunden ist, deren Verformung den Betätigungsarm (412) um den Drehpunkt (414) dreht, um das Auslösesignal zu erzeugen.

13. Vorrichtung nach Anspruch 12, wobei das Lichtbogenfeststellungssystem (200) eine Druckfeststellungsvorrichtung umfasst, von der die verformbare Membran (212) einen Teil bildet, wobei die verformbare Membran (212) für das Auslösesignal für den Verriegelungsmechanismus (400) gemäß einer durch einen Lichtbogen erzeugten Druckwelle sorgt.

14. Vorrichtung nach einem der vorherigen Ansprüche, die ferner ein Gehäuse umfasst, in dem die Vorrichtung montiert ist.

15. Vorrichtung nach Anspruch 14, wobei das Gehäuse Luft oder ein Gas enthält.

## Revendications

1. Appareil (100) d'extinction d'arc pour créer un court-circuit métallique lorsqu'un arc électrique est détecté, l'appareil comprenant:
au moins un connecteur (318, 320, 322) électrique auquel l'alimentation en électricité peut être connectée;
un organe (302) de contact mobile qui peut se déplacer d'une première position vers une seconde position pour contacter chaque connecteur (318, 320, 322) électrique ;
un mécanisme (400) de verrouillage pour verrouiller l'organe (302) de contact mobile dans la première position qui est espacée de chaque connecteur (318, 320, 322) électrique ; et
un système (200) de détection d'arc pour fournir un signal de libération pour le mécanisme (400) de verrouillage lorsque l'arc est détecté, le mécanisme (400) de verrouillage libérant l'organe (302) de contact mobile en réponse au signal de libération de sorte qu'il peut se déplacer en contact avec chaque connecteur (318, 320, 322) électrique pour créer le court-circuit métallique;
**caractérisé en ce que** l'organe (302) de contact mobile comporte de contacts (328, 330, 332) montés sur celui-ci qui viennent engager respectivement l'un desdits au moins un connecteur (318, 320, 322) électrique lorsque l'organe (302) de contact mobile se déplace en contact avec chaque connecteur (310, 320, 322) électrique ;
et **en ce que** l'organe (302) de contact mobile est supporté sur un élément (340, 342) central de guidage se prolongeant à une base (402) du mécanisme (400) de verrouillage avec des éléments (306, 308, 310) de guidage étant prévus au-dessus de l'organe (302) de contact mobile ; pour fournir un alignement de paires de contacts (328, 330, 332) respectivement avec certains desdits au moins un connecteur (318, 320, 322) électrique pendant le déploiement de l'organe (302) de contact mobile.

2. Appareil selon la revendication 1, dans lequel l'organe (302) de contact mobile comprend au moins un élément (324, 326) d'entraînement qui déplace l'organe (302) de contact mobile de la première position vers la seconde position lorsque le mécanisme (400) de verrouillage est libéré.

3. Appareil selon la revendication 2, dans lequel chaque élément (324, 326) d'entraînement comprend un dispositif de stockage d'énergie qui libère l'énergie stockée pour déplacer l'organe (302) de contact mobile dans la seconde position.

4. Appareil selon la revendication 3, dans lequel chaque élément d'entraînement comprend un élément (324, 326) de ressort qui est comprimé lorsque l'organe (302) de contact mobile est dans la première position.

5. Appareil selon la revendication 3, dans lequel chaque élément d'entraînement comprend un agencement de piston.

6. Appareil selon la revendication 3, dans lequel chaque élément d'entraînement comprend un actionneur électromagnétique.

7. Appareil selon l'une quelconque des revendications précédentes, dans lequel le mécanisme (400) de verrouillage comprend en outre un premier organe (410) d'arbre qui engage l'élément (340) de guidage central, le premier organe (410) d'arbre comprenant une partie (408) de fente qui vient s'engager avec une partie (342) de l'élément (340) central de guidage dans une position verrouillée.

8. Appareil selon la revendication 7, dans lequel le mécanisme (400) de verrouillage comprend en outre un premier élément (428) de came monté sur un second organe (430) d'arbre et relié au premier élément (410) d'arbre, le premier élément (428) de came ayant au moins une position de verrouillage; et un bras (412) d'actionnement qui engage un emplacement de verrouillage sur le premier élément (428) de came.

9. Appareil selon la revendication 8, dans lequel le mécanisme (400) de verrouillage comprend en outre un second élément (432) de came monté sur le premier organe (410) d'arbre et étant sollicité dans la position verrouillée par l'engagement du deuxième élément (432) de came avec le second arbre (430).

10. Appareil selon la revendication 9, dans lequel le deuxième élément (432) de came se déplace vers une position de déverrouillage lorsque le signal de libération est appliqué au premier organe (426) de came, le deuxième organe (432) de came faisant tourner le premier organe (410) d'arbre hors l'engagement avec l'organe (340) central de guidage pour libérer l'organe (302) de contact mobile.

11. Appareil selon la revendication 10, dans lequel le signal de libération comprend la rotation du bras (412) d'actionnement autour d'un pivot (414) pour faire tourner le premier élément (426) de came en libérant ainsi le deuxième élément (432) de came.

12. Appareil selon la revendication 11, dans lequel la rotation du bras (412) d'actionnement est provoquée par la déformation d'une membrane (212) déformable du système (200) de détection d'arc, une extrémité (422) du bras (412) d'actionnement à distance de la partie de verrouillage et située de l'autre côté du pivot (414) étant reliée à la membrane (212) déformable, la déformation qui fait tourner le bras (412) d'actionnement autour du pivot (414) pour générer le signal de libération.

13. Appareil selon la revendication 12, dans lequel le système (200) de détection d'arc comprend un dispositif de détection de pression dont la membrane (212) déformable forme une partie, la membrane (212) déformable fournissant le signal de libération pour le mécanisme (400) de verrouillage conformément à une onde de pression générée par un arc.

14. Appareil selon l'une quelconque des revendications précédentes, comprenant en outre un boîtier dans lequel l'appareil est monté.

15. Appareil selon la revendication 14, dans lequel le boîtier contient de l'air ou un gaz.
